(19) **Europäisches Patentamt / European Patent Office / Office européen des brevets**

(11) **EP 4 633 151 A1**

(12) **EUROPEAN PATENT APPLICATION**

(43) Date of publication:
**15.10.2025 Bulletin 2025/42**

(21) Application number: **24305576.1**

(22) Date of filing: **09.04.2024**

(51) International Patent Classification (IPC):
**H04N 19/117** (2014.01)   **H04N 19/70** (2014.01)
**H04N 19/85** (2014.01)

(52) Cooperative Patent Classification (CPC):
**H04N 19/117; H04N 19/70; H04N 19/85**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
 • **LE MEUR, Olivier**
   **35160 TALENSAC (FR)**

 • **AUMONT, Franck**
   **35770 VERN SUR SEICHE (FR)**
 • **DEMARTY, Claire-Helene**
   **35520 MONTREUIL LE GAST (FR)**
 • **BLONDE, Laurent**
   **35235 THORIGNE-FOUILLARD (FR)**
 • **REINHARD, Erik**
   **35630 HEDE-BAZOUGES (FR)**

(74) Representative: **Interdigital**
**Immeuble ZEN 2**
**845 A, avenue des Champs Blancs**
**35510 Cesson-Sévigné (FR)**

(54) **NEURAL NETWORK POST FILTER FOR ENERGY-RECOVERY**

(57)   Methods and devices enable the distribution of video with reduced energy and the reconstruction of a video with recovered energy, similar to the original video. The recovery is done using a neural network post filter enabled through a syntax element carried by the video. An additional syntax element may define a recovery ratio.

Figure 6

EP 4 633 151 A1

**Description**

TECHNICAL FIELD

At least one of the present embodiments generally relates to a video encoding and decoding method and device, and more particularly to syntax elements defining a neural network post-processing filter for processing an energy-aware video.

BACKGROUND ART

To achieve high compression efficiency, image and video coding schemes usually employ prediction and transform to leverage spatial and temporal redundancy in the video content. Generally, intra or inter prediction is used to exploit the intra or inter frame correlation, then the differences between the original image block and the predicted image block, often denoted as prediction errors or prediction residuals, are transformed, quantized and entropy coded. During encoding the original image block is usually partitioned/split into sub-blocks for example using quad-tree partitioning. To reconstruct the video, the compressed data is decoded by inverse processes corresponding to the prediction, transform, quantization and entropy coding.

Reducing energy consumption of electronic devices has become a requirement not only for manufacturers of electronic devices but also to limit, as much as possible, the environmental impact and to contribute to the emergence of a sustainable display industry. The increase in display resolution from SD to HD, then to 4K and soon to 8K and beyond, as well as the introduction of high dynamic range imaging, has brought about a corresponding increase in energy requirements of display devices. This is not consistent with the global need to reduce energy consumption knowing that a huge number of devices has a display (i.e., TV, Mobile phones, tablets, etc.). Indeed, displays are the most important source of energy consumption, for consumer electronic devices, either battery-powered (e.g., smartphones, tablets, head-mounted displays, car display screens) or not (e.g., television sets, advertisement display panels). Different display technologies have been developed in the recent years. Although modem displays consume energy in a more controllable and efficient manner than older displays, they remain the most important source of energy consumption in a video chain. Organic Light Emitting Diode (OLED) is one example of display technology that is finding increasingly widespread use because of numerous advantages compared to former technologies such as Thin-Film Transistor Liquid Crystal Displays (TFT-LCDs). Rather than using a uniform backlight, OLED displays, as well as mini LEDS, are composed of individual directly emissive image pixels. OLEDs power consumption is therefore highly correlated to the image content and the power consumption for a given input image can be estimated by considering the values of the displayed image pixels. It is therefore interesting to determine energy-aware images or videos (i.e., images or videos that will need less energy when displayed, notably on consumer electronics OLED displays) and distribute these energy-aware images or videos.

An example of technique for determining energy-aware images is proposed in European patent application EP23305294.3 that introduce the notion of self-contained invertible energy-aware image. Such kind of energy-aware image can be obtained using an invertible energy-aware network in a forward manner to map an original image into an energy-aware image. The neural-network based solution of EP23305294.3 allows to reconstruct the exact original image by using the same invertible energy-aware network in a backward manner on an energy-aware image and without significant losses.

SUMMARY

According to a first aspect of at least one embodiment, a method comprises obtaining a bitstream comprising encoded video data with reduced energy and a supplemental enhancement information message comprising a flag enabling energy recovery neural network post-processing filter, decoding video, in the condition that the flag enabling energy recovery neural network post-processing filter is enabled, applying to the decoded video the energy recovery neural network post-processing filter, and providing the video.

According to a first aspect of at least one embodiment, a method comprises obtaining video data, determining a supplemental enhancement information message comprising a flag enabling energy recovery neural network post-processing filter, determining video data with reduced energy from the obtained video data, encoding video data with reduced energy, generating a bitstream comprising encoded video and supplemental enhancement information message and providing the bitstream.

According to a second aspect of at least one embodiment, an apparatus comprises one or more processors configured to obtain a bitstream comprising encoded video data with reduced energy and a supplemental enhancement information message comprising a flag enabling energy recovery neural network post-processing filter, decode video, in the condition that the flag enabling energy recovery neural network post-processing filter is enabled, apply to the decoded video the energy recovery neural network post-processing filter, and provide the video.

According to a second aspect of at least one embodiment, an apparatus comprises one or more processors configured to obtain video data, determine a supplemental enhancement information message comprising a flag enabling energy recovery neural network post-processing filter, determine video data with reduced energy from the obtained video data, encode video data with reduced energy, generate a bitstream comprising encoded video and supplemental enhancement information message, and provide the bitstream.

One or more of the present embodiments also provide a computer readable storage medium having stored thereon data generated according to the second aspect. One or more of the present embodiments also provide a computer readable storage medium having stored thereon instructions according to at least part of any one of the methods described above. One or more embodiments also provide a computer program product including instructions for performing at least part of any one of the methods described above.

BRIEF SUMMARY OF THE DRAWINGS

Figure 1 illustrates a block diagram of an example of a system in which various aspects and embodiments are implemented.

Figure 2 describes an example of a context in which following embodiments can be implemented.

Figure 3 illustrates a block diagram of an example of video encoder.

Figure 4 illustrates a block diagram of an example of video decoder.

Figure 5 illustrates an example of process for training a model for generating an energy-aware image and recovering an image similar to the original image according to a solution based on an invertible neural network.

Figure 6 illustrates a block diagram of an example of video coding system according to embodiments.

Figure 7 illustrates an example process for encoding a bitstream comprising an ER-NNPFC-SEI message according to embodiments.

Figure 8 illustrates an example process for decoding a bitstream comprising an ER-NNPFC-SEI message according to embodiments.

DETAILED DESCRIPTION

The present aspects, although describing principles in the context of VVC (Versatile Video Coding) or HEVC (High Efficiency Video Coding) specifications, are not limited to these video coding standards, and can be applied, for example, to other standards and recommendations and extensions of any such standards and recommendations (including VVC and HEVC). Unless indicated otherwise, or technically precluded, the aspects described in this application can be used individually or in combination.

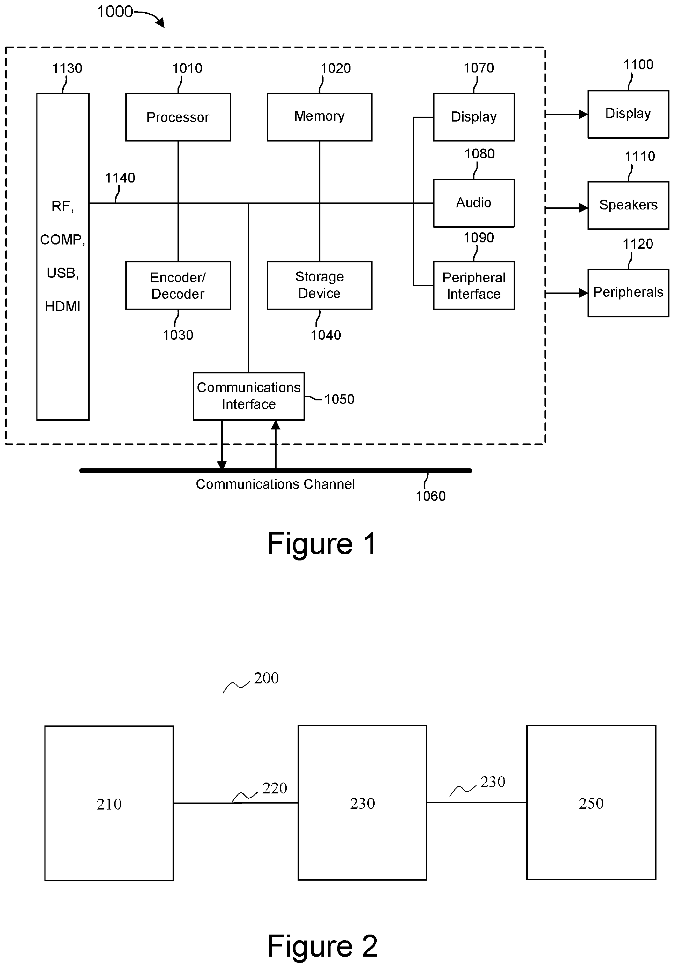

**Figure 1** illustrates a block diagram of an example of a system in which various aspects and embodiments are implemented. System 1000 can be embodied as a device or apparatus including the various components described below and is configured to perform one or more of the aspects described in this document. Examples of such devices include, but are not limited to, various electronic devices such as computers, smartphones, tablets, digital multimedia set top boxes, digital television receivers, personal video recording systems, connected home appliances, vehicle entertainment systems, vehicle control systems, drones, video surveillance cameras, and more generally data servers. Elements of system 1000, singly or in combination, can be embodied in a single integrated circuit (IC), multiple Ics, and/or discrete components. For example, in at least one embodiment, the processing and encoder/decoder elements of system 1000 are distributed across multiple Ics and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash-based memory, magnetic disk drive, solid-state drive (SSD), and/or optical disk drive. The storage device 1040 can include an internal storage device, an attached storage device (including detachable and non-detachable storage devices), and/or a network accessible storage device (a.k.a. cloud storage), as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions described further below. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform one or more of the aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265), or VVC (Versatile Video Coding, also known as H.266).

The input to the elements of system 1000 can be provided through various input devices as indicated in block 1130. Such input devices include, but are not limited to, a radio frequency (RF) portion that receives an RF signal transmitted, for example, over the air by a broadcaster, a Component (COMP) input terminal (or a set of COMP input terminals), a Universal Serial Bus (USB) input terminal, and/or a High-Definition Multimedia Interface (HDMI) input terminal. Other examples include composite video.

In various embodiments, the input devices of block 1130 have associated respective input processing elements as known in the art. For example, the RF portion can be associated with elements suitable for selecting a desired frequency (also referred to as selecting a signal, or band-limiting a signal to a band of frequencies), down converting the selected signal, band-limiting again to a narrower band of frequencies to select (for example) a signal frequency band which can be referred to as a channel in certain embodiments, demodulating the down converted and band-limited signal, performing error correction, and demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna. The RF portion may comply with standard specifications such as those published by Digital Video Broadcasting (DVB), Advanced Television Systems Committee (ATSC), Association of Radio Industries and Businesses (ARIB) or others.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface Ics or within processor 1010 as necessary. The demodulated, error corrected, and demultiplexed stream is provided to various processing elements, including, for example, processor 1010, and encoder/decoder 1030 operating in combination with the memory and storage elements to process the data stream as necessary for presentation on an output device.

Various elements of system 1000 can be provided within an integrated housing, Within the integrated housing, the various elements can be interconnected and transmit data therebetween using suitable connection arrangement 1140, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or other device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

**Figure 2** describes an example of a context in which following embodiments can be implemented. In this context 200, a system 210 transmits a video stream to a system 230 using a communication channel 220. Examples of system 210 comprise a camera, a storage device, a computer, a drone, a video surveillance camera, a server or any device capable of delivering a video stream. The video stream is either encoded and transmitted by the system 210 or received and/or stored by the system 210 and then transmitted. The communication channel 220 is a wired (for example Internet, Ethernet, Cable network) or a wireless (for example WiFi, 3G, 4G or 5G, satellite TV, terrestrial TV) network link. The system 230 receives and decodes the video stream to generate a sequence of decoded pictures. An example of system 230 is a set top box. The obtained sequence of decoded pictures is then transmitted to a display system 250 using a communication channel 240, that could be a wired or wireless network as introduced above. The display system 250 then displays said pictures. An example of display system 250 is a television or display monitor.

In an embodiment, the system 230 and the display system 250 are comprised in a single device, thus combining the reception, decoding and display of the video stream. Examples of such device are a television, a computer, a tablet, a smartphone, a head-mounted display, a vehicle entertainment system, a medical device.

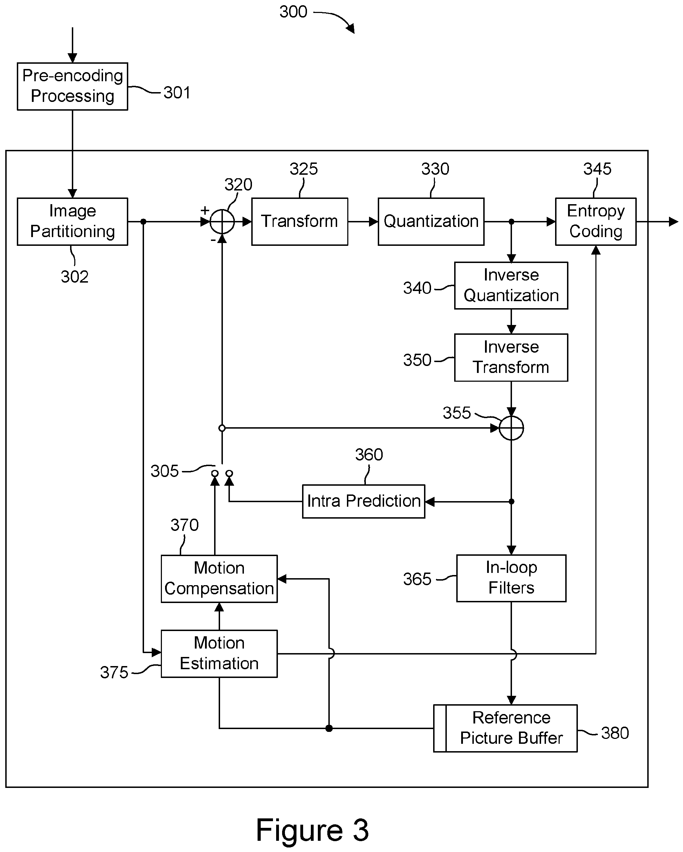

**Figure 3** illustrates a block diagram of an example of video encoder. Variations of this encoder 300 are contemplated, but the encoder 300 is described below for purposes of clarity without describing all expected variations. Before being encoded, the video sequence may go through pre-encoding processing 301, for example, applying a color transform to the input color picture (e.g., conversion from RGB 4:4:4 to YcbCr 4:2:0), or performing a remapping of the input picture components in order to get a signal distribution more resilient to compression (for instance using a histogram equalization of one of the color components). Metadata can be associated with the pre-processing and attached to the bitstream, for example in the form of supplemental enhancement information (SEI) messages, for the standards that include such mechanism.

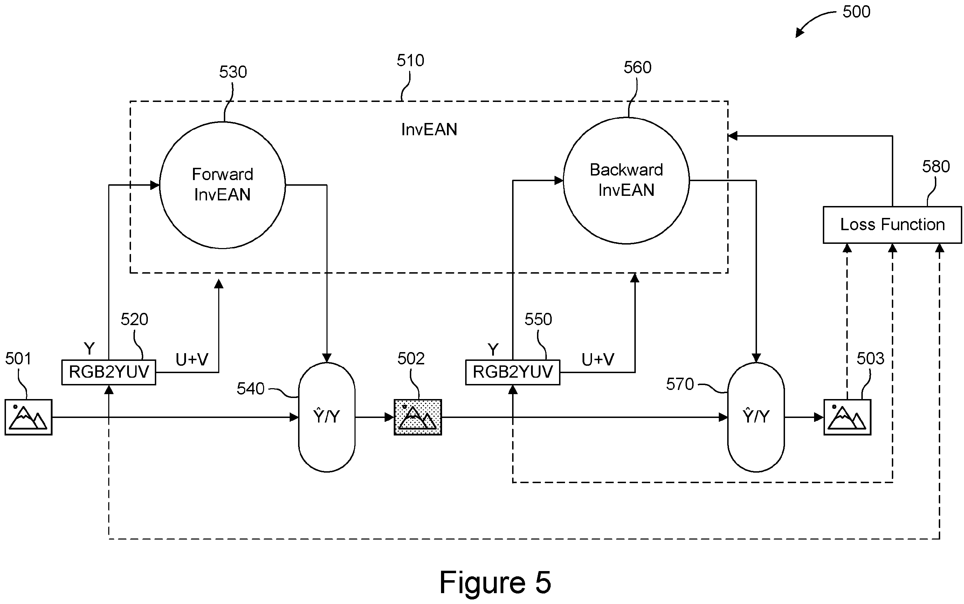

In the encoder, a picture is encoded by the encoder elements as described below. The picture to be encoded is partitioned (302), for example as further described in figure 5, and processed in units such as coding units. Each unit is encoded using, for example, either an intra or inter mode. When a unit is encoded in an intra mode, it performs intra prediction (360). In an inter mode, motion estimation (375) and compensation (370) are performed. The encoder decides (305) which one of the intra mode or inter mode to use for encoding the unit, and indicates the intra/inter decision by, for example, a prediction mode flag. Prediction residuals are calculated, for example, by subtracting (320) the predicted block from the original image block. The prediction residuals are then transformed (325) and quantized (330). The quantized transform coefficients, as well as motion vectors and other syntax elements, are entropy coded (345) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (340) and inverse transformed (350) to decode prediction residuals. Combining (355) the decoded prediction residuals and the predicted block, an image block is reconstructed. In-loop filters (365) are applied to the reconstructed picture to perform, for example, deblocking/SAO (Sample Adaptive Offset), Adaptive Loop-Filter (ALF) filtering to reduce encoding artifacts. The filtered image is stored at a reference picture buffer (380) for further use.

The encoder also generally performs video decoding as part of encoding video data.

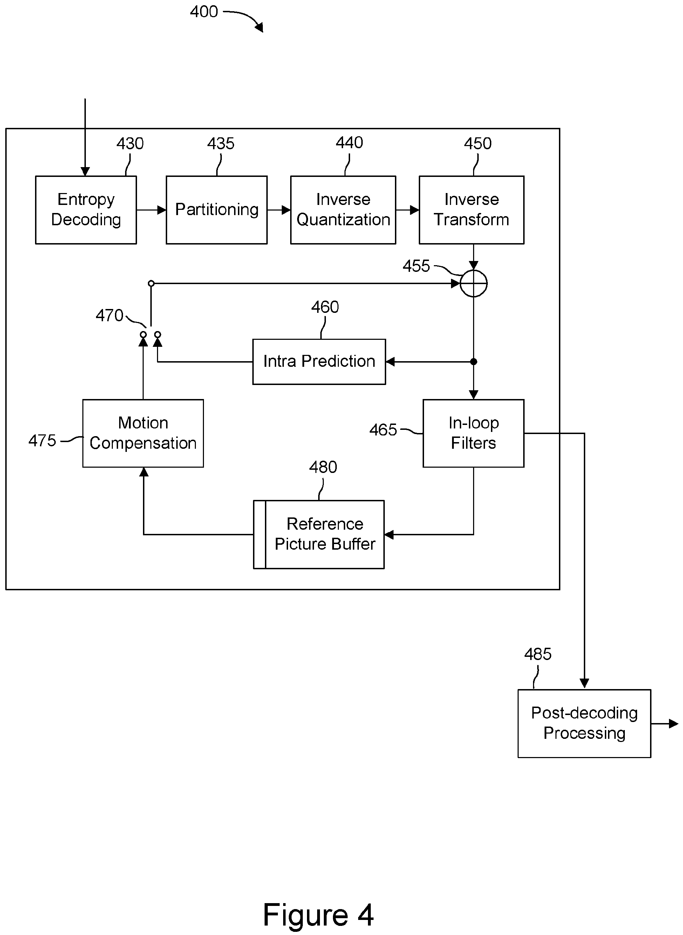

**Figure 4** illustrates a block diagram of an example of video decoder. In the decoder 400, a bitstream is decoded by the decoder elements as described below. Video decoder 400 generally performs a decoding pass reciprocal to the encoding pass as described in previous figure. The input of the decoder includes a video bitstream, which can be generated by video encoder 300 of figure 3. The bitstream is first entropy decoded (430) to obtain transform coefficients, motion vectors, and other coded information. The picture partition information indicates how the picture is partitioned. The decoder may therefore divide (435) the picture according to the decoded picture partitioning information. The transform coefficients are de-quantized (440) and inverse transformed (450) to decode the prediction residuals. Combining (455) the decoded prediction residuals and the predicted block, an image block is reconstructed. The predicted block can be obtained (470) from intra prediction (460) or motion-compensated prediction (i.e., inter prediction) (475). In-loop filters (465) are applied to the reconstructed image. The filtered image is stored at a reference picture buffer (480).

The decoded picture can further go through post-decoding processing (485), for example, an inverse color transform (e.g., conversion from YCbCr 4:2:0 to RGB 4:4:4) or an inverse remapping performing the inverse of the remapping process performed in the pre-encoding processing (301 of figure 3). The post-decoding processing can use metadata derived in the pre-encoding processing and signaled in the bitstream.

Video coding standards like AVC, HEVC and VVC enable embedding of metadata in video bitstreams through SEI (Supplemental Enhancement information) messages. Those messages are defined either in the core standard or companion standard like VSEI (Versatile Supplemental Enhancement Information), and more get added in successive versions of these standards.

A SEI message is a syntax structure that is defined in various MPEG standards to allow carriage of metadata. It is a specific type of NAL (Network Access Layer) unit, which is the elementary packet in MPEG bitstream formats. The SEI syntax may vary slightly across different standards, but it commonly contains at least a payload type, a payload length, and the payload itself. The SEI syntax defined for VVC is illustrated in Table 1 as an example.

Table 1

| sei_message( ) { | Descriptor |
|---|---|
|    payloadType = 0 | |
|    do { | |

(continued)

| | |
|---|---|
| payload_type_byte | u(8) |
| payloadType += payload_type_byte | |
| } while( payload_type_byte = = 0xFF ) | |
| payloadSize = 0 | |
| do { | |
| payload_size_byte | u(8) |
| payloadSize += payload_size_byte | |
| } while( payload_size_byte = = 0xFF ) | |
| sei_payload( payloadType, payloadSize ) | |
| } | |

In addition, a specific syntax structure is typically defined for each payload type and instantiated by a sei_payload syntax structure according to each payload type. For example, a specific SEI message related to Neural-Network Post-Filter Characteristics (NNPFC-SEI) specifies that a neural network may be used as a post-processing filter (hereafter abbreviated as NNPF) and provides some parameters of such neural network, therefore allowing an encoder to define a neural network for performing a post-processing operation after the decoding operation. The syntax of such NNPFC-SEI message, as disclosed in ISO/IEC DIS 23002-7, is illustrated in Table 2.

Table 2

| nn_post_filter_characteristics( payloadSize ) { | Descriptor |
|---|---|
| nnpfc_purpose | u(16) |
| nnpfc_id | ue(v) |
| nnpfc_base_flag | u(1) |
| nnpfc_mode_idc | ue(v) |
| if( nnpfc_mode_idc = = 1 ) { | |
| while( !byte_aligned( ) ) | |
| nnpfc_alignment_zero_bit_a | u(1) |
| nnpfc_tag_uri | st(v) |
| nnpfc_uri | st(v) |
| } | |
| nnpfc_property_present flag | u(1) |
| if( nnpfc_property_present_flag ) { | |
| /* input and output formatting */ | |
| nnpfc_num_input_pics_minus1 | ue(v) |
| if( nnpfc_num_input_pics_minus1 > 0 ) { | |
| for( i = 0; i <= nnpfc_num_input_pics_minus1; i++ ) | |
| nnpfc_input_pic_filtering_flag[ i ] | u(1) |
| nnpfc_absent_input_pic_zero_flag | u(1) |
| } | |
| if( ChromaUpsamplingFlag ) | |
| nnpfc_out_sub_c_flag | u(1) |
| if( ColourizationFlag ) | |

(continued)

| | |
|---|---|
| nnpfc_out_colour_format_idc | u(2) |
| if( ResolutionResamplingFlag ) { | |
|     nnpfc_pic_width_num_minus1 | ue(v) |
|     nnpfc_pic_width_denom_minus1 | ue(v) |
|     nnpfc_pic_height_num_minus1 | ue(v) |
|     nnpfc_pic_height_denom_minus1 | ue(v) |
| } | |
| if( PictureRateUpsamplingFlag ) | |
|     for( i = 0; i < nnpfc_num_input_pics_minus1; i++ ) | |
|         nnpfc_interpolated_pics[ i ] | ue(v) |
| if( TemporalExtrapolationFlag ) | |
|     nnpfc_extrapolated_pics_minus1 | ue(v) |
| nnpfc_component_last_flag | u(1) |
| nnpfc_inp format_idc | ue(v) |
| nnpfc_auxiliary_inp_idc | ue(v) |
| nnpfc_inp_order_idc | ue(v) |
| if( nnpfc_inp_format_idc = = 1 ) { | |
|     if( nnpfc_inp_order_idc != 1 ) | |
|         nnpfc_inp_tensor_luma_bitdepth_minus8 | ue(v) |
|     if( nnpfc_inp_order_idc > 0 ) | |
|         nnpfc_inp_tensor_chroma_bitdepth_minus8 | ue(v) |
| } | |
| nnpfc_out_format_idc | ue(v) |
| nnpfc_out_order_idc | ue(v) |
| if( nnpfc_out_format_idc = = 1 ) { | |
|     if( nnpfc_out_order_idc != 1 ) | |
|         nnpfc_out_tensor_luma_bitdepth_minus8 | ue(v) |
|     if( nnpfc_out_order_idc != 0 ) | |
|         nnpfc_out_tensor_chroma_bitdepth_minus8 | ue(v) |
| } | |
| nnpfc_separate_colour_description_present_flag | u(1) |
| if( nnpfc_separate_colour_description_present_flag ) { | |
|     nnpfc_colour_primaries | u(8) |
|     nnpfc_transfer_characteristics | u(8) |
|     if( nnpfc_out_format_idc = = 1 ) { | |
|         nnpfc_matrix_coeffs | u(8) |
|         nnpfc_full_range_flag | u(1) |
|     } | |
| } | |
| if( nnpfc_out_order_idc > 0 ) | |

(continued)

| | |
|---|---|
| nnpfc_chroma_loc_info_present_flag | u(1) |
| if( nnpfc_chroma_loc_info_present_flag ) | |
| nnpfc_chroma_sample_loc_type_frame | ue(v) |
| nnpfc_overlap | ue(v) |
| nnpfc_constant_patch_size_flag | u(1) |
| if( nnpfc_constant_patch_size_flag ) { | |
| nnpfc_patch_width_minus1 | ue(v) |
| nnpfc_patch_height_minus1 | ue(v) |
| } else { | |
| nnpfc_extended_patch_width_cd_delta_minus1 | ue(v) |
| nnpfc_extended_patch_height_cd_delta_minus1 | ue(v) |
| } | |
| nnpfc_padding_type | ue(v) |
| if( nnpfc_padding_type = = 4 ) { | |
| if( nnpfc_inp_order_idc != 1 ) | |
| nnpfc_luma_padding val | ue(v) |
| if( nnpfc_inp_order_idc != 0 ) { | |
| nnpfc_cb_padding_val | ue(v) |
| nnpfc_cr_padding_val | ue(v) |
| } | |
| } | |
| nnpfc_complexity_info_present_flag | u(1) |
| if( nnpfc_complexity_info_present_flag ) { | |
| nnpfc_parameter_type_idc | u(2) |
| if( nnpfc_parameter_type_idc != 2 ) | |
| nnpfc_log2_parameter_bit_length_minus3 | u(2) |
| nnpfc_num_parameters_idc | u(6) |
| nnpfc_num_kmac_operations_idc | ue(v) |
| nnpfc_total_kilobyte_size | ue(v) |
| } | |
| nnpfc_num_metadata_extension_bits | ue(v) |
| nnpfc_num_metadata_extension_bits > 0 ) | |
| fc_reserved_metadata_extensionu | ) |
| | |
| O   /*ISO/IEC 15938-17 bitstream */ | |
| n   if(nnpfc_mode_idc = = 0 ) { | |
| (      while(!byte_aligned( ) ) | |
| _            nnpfc_alignment_zero_bit_bu1 | |
| for(i = 0; more_data_in_payload( ); i++ )(u)1 | |
| nnfc_payload_byte[ i ]b8)b(8) | |

(continued)

| | |
|---|---|
| | |
| | |

A NNPFC-SEI message indicates the intended purpose of the NNPF, specifies the input and output of the neural network and describes its complexity. Up to now, 6 modes have been defined: enhancing visual quality, changing spatial resolution (e.g., up-sampling from high-definition decoded video to ultra-high definition), changing picture rate (e.g., up-sampling from 30 Hz to 60 Hz), up-sampling bit depth to increase the dynamic range of pixel values, colorization to convert monochrome video to full colors, and temporal extrapolation. The SEI syntax defined in ISO/IEC DIS 23002-7 allows to define the purpose of a NNPF by using a flag hereafter named nnpfc_purpose as illustrated in Table 3, where ( nnpfc_purpose & bitMask ) not equal to 0 indicates that the NNPF has the purpose associated with the bitMask value. When nnpfc_purpose is greater than 0 and ( nnpfc_purpose & bitMask ) is equal to 0, the purpose associated with the bitMask value is not applicable to the NNPF. When nnpfc_purpose is equal to 0x00, the NNPF may be used as determined by the application and as specified by the nnpfc_application_purpose tag uri. For instance, if the nnpfc_purpose is equal to 0x0C (0b0001100), it means that a resolution resampling NNPF and a picture rate upsampling NNPF should be activated.

Table 3

| bitMask | Interpretation |
|---|---|
| 0x01 | General visual quality improvement |
| 0x02 | Chroma upsampling (from the 4:2:0 chroma format to the 4:2:2 or 4:4:4 chroma format, or from the 4:2:2 chroma format to the 4:4:4 chroma format) |
| 0x04 | Resolution resampling (increasing or decreasing the width or height) |
| 0x08 | Picture rate upsampling |
| 0x10 | Bit depth upsampling (increasing the luma bit depth or the chroma bit depth) |
| 0x20 | Colourization |
| 0x40 | Temporal extrapolation (i.e., generating one or more future pictures) |

The value of nnpfc_purpose may be in the range of 0 to 127. This bitfield is used to derive corresponding variables for the purpose flags shown in table 3. The variables ChromaUpsamplingFlag, ResolutionResamplingFlag, PictureRateUpsamplingFlag, BitDepthUpsamplingFlag, ColourizationFlag, and TemporalExtrapolationFlag specifying whether nnpfc_purpose indicates the purpose of the NNPF to include chroma upsampling, resolution resampling, picture rate upsampling, bit depth upsampling, colourization mode and temporal extrapolation respectively, are derived from the nnpfc_purpose bitfield as follows:

$$\text{ChromaUpsamplingFlag} = ( ( \text{nnpfc\_purpose} \ \& \ 0x02 ) > 0 ) \ ? \ 1 : 0$$

$$\text{ResolutionResamplingFlag} = ( ( \text{nnpfc\_purpose} \ \& \ 0x04 ) > 0 ) \ ? \ 1 : 0$$

$$\text{PictureRateUpsamplingFlag} = ( ( \text{nnpfc\_purpose} \ \& \ 0x08 ) > 0 ) \ ? \ 1 : 0$$

$$\text{BitDepthUpsamplingFlag} = ( ( \text{nnpfc\_purpose} \ \& \ 0x10 ) > 0 ) \ ? \ 1 : 0$$

$$\text{ColourizationFlag} = ( ( \text{nnpfc\_purpose} \ \& \ 0x20 ) > 0 ) \ ? \ 1 : 0$$

$$\text{TemporalExtrapolationFlag} = ( ( \text{nnpfc\_purpose} \ \& \ 0x40 ) > 0 ) \ ? \ 1 : 0$$

The use of a NNPFC-SEI message provides backward compatibility. Indeed, by implementing neural-network filters as a post-processing step and signaling them in a SEI message, their utilization can be introduced to neural network capable devices and services without negatively impacting older systems that lack the ability to execute neural networks.

**Figure 5** illustrates an example of process for training a model for generating an energy-aware image and recovering an image similar to the original image according to a solution based on an invertible neural network.

From an original color image $I \in \mathbb{R}^{W \times H \times 3}$ (W being the width of the image and H being the height of the image), the objective is to determine an energy-aware image $I^* \in \mathbb{R}^{W \times H \times 3}$, such that the estimated power consumption of $I^*$ is less than the original one given a reduction ratio called R, while having the highest possible quality. For this purpose, an invertible (energy-aware) neural network 510 is defined (hereafter named InvEAN), allowing to learn a bijective mapping as $I^* = f_\Theta(I)$, where $\Theta$ is the set of trainable parameters of the network. This approach provides a reversible process 500 allowing to generate an energy-aware image 502 from an original image 501 but also to reconstruct a pristine original image 503 from an energy-aware image 502. The process of generating the energy-aware image uses a forward mapping 530 while the reconstruction from the energy-aware image uses a backward mapping 560. Both operations use the same invertible energy-aware network 510.

The proposed InvEAN network 510 is operating on the luminance component and is conditioned by chromatic components of the image, extracted using conventional RGB to YUV functions 520, 550. The output is a modified version of such luminance so that the RGB color image is reconstructed thanks to a luminance ratio as described below:

$$C_i^* = C_i \times \frac{Y_i^*}{Y_i}$$

where, $C_i$ represent input pixels $(r_i, g_i, b_i)$ at spatial location i. $Y_i$ and $Y_i^*$ represent the original luminance and the modified one, respectively. These operations are depicted in the figure by the elements 540 and 570.

The model of the InvEAN is trained according to loss functions 580 based on an original image 501 hereafter noted $I$, the corresponding energy-aware image 502 hereafter noted $I_{fwd}$ and the corresponding reconstructed image 503 hereafter noted $I_{bwd}$.

The loss functions are fundamental to optimize the training according to two main goals. First, running forwardly (performing a forward mapping) the InvEAN network, hereafter noted as $f_\Theta$, should allow to obtain an energy-aware image and second, running backwardly (performing a backward mapping) the InvEAN network, hereafter noted as $f_\Theta^{-1}$, should allow to retrieve the original image. Formerly, this can be expressed as:

$$I_{fwd} = f_\Theta(I)$$

$$I_{bwd} = f_\Theta^{-1}(I_{fwd})$$

It is important to constraint the learning such that the image $I_{fwd}$ stays as close as possible to the input image $I$, but with a power constraint. In other words, the forward loss can be expressed as:

$$\mathcal{L}_{fwd} = \lambda_1 \times \mathcal{L}_{MAE}(I, I_{fwd}) + \lambda_2 \times \mathcal{L}_{ssim}(I, I_{fwd}) + \lambda_3 \times \mathcal{L}_{pow}(I, I_{fwd})$$

For the backward pass, the goal is to retrieve the original image with the maximal similarity. In other words, the backward loss can be expressed as:

$$\mathcal{L}_{bwd} = \lambda_4 \times \mathcal{L}_{MAE}(I, I_{bwd}) + \lambda_5 \times \mathcal{L}_{ssim}(I, I_{bwd})$$

The forward loss and the backward loss both use a Mean Absolute Error (MAE) that characterizes the difference of luminance between an original image and the reconstructed image for all the pixels of the images. This loss can be expressed as:

$$\mathcal{L}_{MAE} = \frac{1}{N} \sum_{1}^{N} |Y_i - \hat{Y}_i|$$

where *Y* is the original image and *Ŷ* is the reconstructed image, *N* the total number of pixels in the image, and i is the spatial coordinate of the pixel.

The power loss characterizes the difference of power between an original image and the corresponding modified image for all the pixels of the images. This loss can be expressed as:

$$\mathcal{L}_{pow} = \left\| (1 - R) . P_Y - P_{\widehat{Y}} \right\|$$

with:

$$P_Y = \frac{1}{N} \sum_{i=1}^{N} Y_i^{\gamma}$$

where N is the number of pixels in the image.

The structural similarity index measure (SSIM) loss characterizes the difference between an input image and the corresponding modified image. This measure is based on three comparison measurements (i.e., luminance, contrast and structure) and relies on local average, local variance and local covariance. The loss is given by one minus the SSIM value and can be expressed as:

$$\mathcal{L}_{ssim} = 1 - SSIM(Y, \widehat{Y})$$

where SSIM is the well-known full-reference quality metric. SSIM is in the range [0,1], where 1 indicates the maximum value.

Finally, the total loss minimized during the training is expressed as:

$$\mathcal{L}_{Total} = \mathcal{L}_{fwd} + \mathcal{L}_{bwd}$$

The losses are described above as based on luminance but may also be based on color components.

Embodiments described hereafter have been designed with the foregoing in mind and extend the purpose of NNPFC-SEI messages to enable the distribution of energy-aware images or videos (i.e., images or videos with reduced energy consumption when being displayed) and the ability to reconstruct on the receiver side an image or video similar to the original (i.e., not energy-aware), through the use of an Energy-Recovery Neural-Network Post-Filter Characteristics Supplemental Enhancement Information (ER-NNPFC-SEI) message. This reconstruction is made possible for example by using an invertible energy aware network such as the InvEAN 510 described in figure 5 or other process for determining an image with recovered energy from an energy-aware image. Therefore, a receiver compliant with such messages will be able to recover an image with full energy from a received energy-aware image. The recovery is triggered by the reception of an ER-NNPFC-SEI message. The activation of this feature may thus be triggered by the content provider or distributor.

All receiver devices will not perform the energy recovery for the energy-aware image but some of them will directly display the received energy-aware reduced image. When an ER-NNPFC-SEI message is received, is some cases, the receiver may choose not to perform the recovery and will display the energy-aware image. A first case is when a receiver is not compatible with these principles and/or does not comprise the means for performing the energy recovery process. A second case is when the device is configured to optimize its energy consumption. Such configuration may be under control of user through changing a setting in a user interface.

In one example where an energy-aware video is distributed with an ER-NNPFC-SEI message to three device, a first device may perform the energy recovery and thus will display a video with recovered energy (consuming more energy), a second device may not be capable of performing the energy recovery (e.g., legacy device that does not understand the ER-NNPFC-SEI message or that does not include the recovery feature) and thus will display the energy-aware video, and a third device will be configured to promote energy reduction and thus will not perform the energy recovery but will display the energy-aware video. Since all receiver devices will not perform the energy recovery, a global reduction of the energy consumption may be achieved in a mass market video distribution system supporting the ER-NNPFC-SEI message.

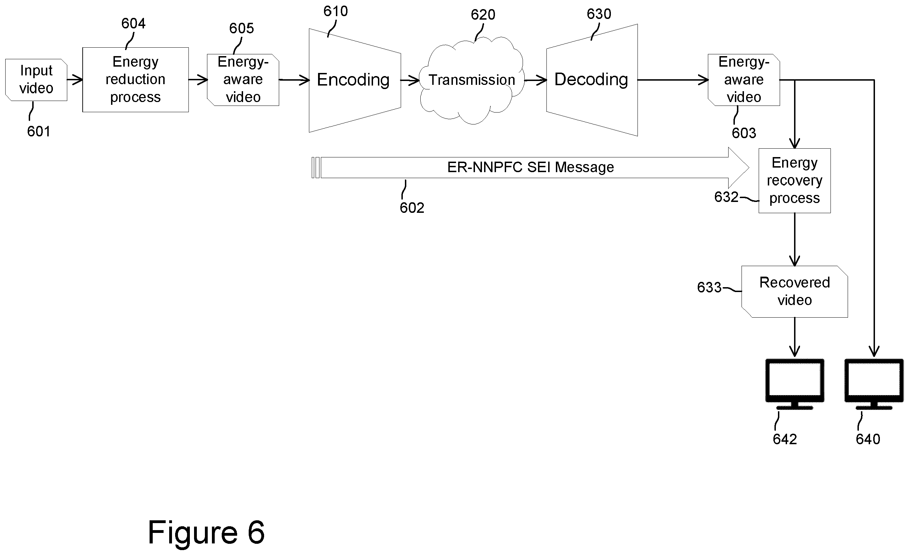

**Figure 6** illustrates a block diagram of an example of video coding system according to embodiments. The input video (601) is processed (604) to generate an energy-aware video (605). The process uses for example a forward pass (530) of the InvEAN of figure 5 or may use another method for generating an energy-aware video. The energy-aware video (605) is encoded (610), for example using a conventional video coding system such as HEVC or VVC or others. An ER-NNPFC-SEI message (602) is determined, for example according to the syntax described herein. The encoded video and the NNPFC-SEI message are provided (620) to the decoder and conventional video decoding is performed (630) to generate the energy-aware video (603). When the NNPFC-SEI message is an ER-NNPFC-SEI message (i.e., comprise syntax elements related to energy related processing), the decoded energy-aware video is post-processed (632) by the neural network post-processing filter to perform the energy recovery of the energy-aware video and determining a recovered video (633) without energy reduction (i.e. similar to the input video). The recovery process uses for example the techniques introduced above such as the backward pass (560) of the InvEAN of figure 5. The resulting energy-recovered video is displayed (642). When a receiver device is not compliant with these mechanisms, or when the receiver device is configured to promote energy reduction or when the ER-NNPFC-SEI message, the energy-aware video is displayed (640).

In at least one embodiment, the use of an energy recovery related neural network post-processing filter is signaled as an additional purpose in a NNPCF-SEI message by using a new flag, hereafter called ReverseEnergyAware-Flag, inserted in the last entry of the table as illustrated in Table 4. The value of 0x80 for the ReverseEnergyAwareFlag is an example according to the current values defined in the ISO/IEC specification. Other bitmask values may be used to carry this flag, such as 0x100 or 0x200.

Table 4

| bitMask | Interpretation |
|---------|----------------|
| 0x01 | General visual quality improvement |
| 0x02 | Chroma upsampling (from the 4:2:0 chroma format to the 4:2:2 or 4:4:4 chroma format, or from the 4:2:2 chroma format to the 4:4:4 chroma format) |
| 0x04 | Resolution resampling (increasing or decreasing the width or height) |
| 0x08 | Picture rate upsampling |
| 0x10 | Bit depth upsampling (increasing the luma bit depth or the chroma bit depth) |
| 0x20 | Colourization |
| 0x40 | Temporal extrapolation |
| 0x80 | Reverse energy aware process |

The other elements of Table 4 are identical to those described in Table 3. The variable ReverseEnergyAware-Flag, defined for specifying the energy-recovery mode is derived from the nnpfc_purpose bitfield as follows:

$$ReverseEnergyAwareFlag = ( ( \text{nnpfc\_purpose} \ \& \ 0x80 ) > 0 ) \ ? \ 1 : 0$$

When this flag is set, the NNPFC-SEI message is considered to be an ER-NNPFC-SEI message as introduced above. This setting may enable the energy recovery process 632 to generate a video with recovered energy from the energy-aware video.

After the addition of this new bitmask value, the value of nnpfc_purpose shall now be in the range of 0 to 255, inclusive and values of 256 to 65 535, inclusive are reserved for future use.

Optionally, in other embodiments, new sections comprising additional syntax elements may be added to the ER-NNPFC-SEI message to specify characteristics or parameters for the energy-recovery post processing.

In at least one embodiment, a simple indication of the target energy recovering ratio is inserted in the ER-NNPFC-SEI message (under the condition of the activation of the ReverseEnergyAwareFlag). The table 5 illustrates an example of syntax for the ER-NNPFC-SEI message. For the sake of readability, only an extract of the complete message is illustrated in this table. Please refer to the syntax of table 2 for the other elements.

Table 5

| ... | |
|-----|--|
| if( PictureRateUpsamplingFlag ) | |
| for( i = 0; i < nnpfc_num_input_pics_minus1; i++ ) | |
| nnpfc_interpolated_pics[ i ] | ue(v) |

(continued)

| | |
|---|---|
| nnpfc component_last flag | u(1) |
| nnpfc_inp format_idc | ue(v) |
| nnpfc auxiliary_inp_idc | ue(v) |
| nnpfc_inp_order_idc | ue(v) |
| if( nnpfc_inp format_idc = = 1 ) { | |
|    if( nnpfc_inp_order_idc != 1 ) | |
|       nnpfc_inp_tensor_luma_bitdepth_minus8 | ue(v) |
|    if( nnpfc_inp_order_idc > 0 ) | |
|       nnpfc_inp_tensor_chroma_bitdepth_minus8 | ue(v) |
| } | |
| if(ReverseEnergyAwareFlag) { | |
|    nnpfc energy_recovering_ratio | u(8) |
| } | |
| nnpfc_out_format_idc | ue(v) |
| nnpfc out order_idc | ue(v) |
| if( nnpfc_out_format_idc = = 1 ) { | |
|    if( nnpfc_out_order_idc != 1 ) | |
|       nnpfc_out_tensor_luma_bitdepth_minus8 | ue(v) |
|    if( nnpfc_out_order_idc != 0 ) | |
|       nnpfc out tensor chroma_bitdepth_minus8 | ue(v) |
| } | |
| ... | |

In at least one embodiment, the **nnpfc_energy_recovering_ratio** syntax element relates to parameter representing the energy reduction ratio used when generating the energy-aware video and thus specifies the amount of energy the post-filter should recover. The value of this parameter represents an energy recovery ratio selected among a list of reduction rates, for example coded over 2 bits, as illustrated in Table 6. In such embodiment, for example, when ReverseEnergyAwareFlag equal to 1, **nnpfc_energy_recovering_ratio** equals to 2 represents an energy reduction rate of 20%.

Table 6

| nnpfc_energy_recovering_ratio | Interpretation |
|---|---|
| 0 | The reduction ratio is 5% |
| 1 | The reduction ratio is 10% |
| 2 | The reduction ratio is 20% |
| 3 | The reduction ratio is 30% |

In at least one embodiment, the value of the **nnpfc_energy_recovering_ratio** syntax element represents an energy reduction recovery value, for example coded over 4 bits, thus varying between 0 and 15. In such embodiment, for example, ReverseEnergyAwareFlag equal to 1 and **nnpfc_energy_recovering_ratio** equal to the value 4 represents an energy recovery rate of 27%. The value 27% is obtained by considering a linear mapping between the **nnpfc_energy_recovering_ratio** value and the maximum value coded over 4 bits (i.e. 15). The energy recovery ratio expressed in percentage of reduction in a range from 0 to 100% is simply given by $\left\lfloor \frac{100}{2^4 - 1} \times nnpfc\_reduction\_ratio \right\rfloor$ ,

where $\lfloor x \rfloor$ gives the nearest integer (floor(x+0.5)).

For **nnpfc_energy_recovering_ratio** = 2 the reduction ratio is 13.

For **nnpfc_energy_recovering_ratio** = 4 the reduction ratio is 27.

For **nnpfc_energy_recovering_ratio** = 8 the reduction ratio is 53.

In at least one embodiment, the value of the **nnpfc_energy_recovering_ratio** syntax element directly represents a target energy recovery ratio value, for example coded over 8 bits, thus varying between 0 and 255. Similarly, to the previous embodiment, the energy recovery ratio is simply given by $\left\lfloor \frac{100}{2^8-1} \times nnpfc\_recovery\_ratio \right\rfloor$ .

Depending on the type of the specified filter, the neural network post filter can process the YUV components or the RGB components. In this case, the flag **nnpfc_separate_colour_description_present_flag** (see table 2) is used to specify the color transformation.

In at least one embodiment, no **nnpfc_energy_recovering_ratio** syntax element is specified. Indeed, a predetermined selected value for the energy recovery ratio may be used, rendering the parameter useless. In another embodiment in which no **nnpfc_energy_recovering_ratio** syntax element is specified, the energy recovery process operates in a best effort mode optimizing the trade-off between energy recovery and visual quality.

In at least one embodiment, the distributor may update the settings of the energy recovery post filter to adapt to a selected energy reduction ratio by defining appropriate parameters for the neural network. This may be specified through the nnpfc_mode_idc parameter, allowing the receiver to adapt the neural network post filter without transmitting any syntax element except the ReverseEnergyAwareFlag. The receiver updates the model accordingly.

In at least one embodiment, the input of the neural network post-processing filter is YUV and the output of the neural network post-processing filter is also YUV. In this case, several strategies can be defined. A first example of strategy is that the post filter only modifies the Y component, U and V components are not changed. A second example of strategy is that the post filter computes the new Y component from the incoming Y component. However, since images are generally expressed using RGB values, the RGB values of the input image are modified by multiplying the RGB components by the ratio of the luminance. In this context, two color transformations are made: YUV to RGB, and the modified RGB to YUV. The **nnpfc_energy_recovering_original** illustrated in Table 7 may be used to define the selected strategy and may be coded on 2 bits.

Table 7

| nnpfc_energy_recovering_original | Interpretation |
|---|---|
| 0 | The post filter modifies the Y component only, U and V are not changed |
| 1 | The post filter modifies the Y component only, which is used to modify the RGB component. A color transform YUV2RGB is here required. |
| 2-3 | Reserved for future use |

This parameter may then be inserted in the ER-NNPFC-SEI message as illustrated in Table 8 (in addition to the syntax of Table 5).

Table 8

| ... | |
|---|---|
| if(ReverseEnergyAwareFlag) { | |
|     nnpfc_energy_recovering_ratio | u(4) or u(8) |
|     nnpfc_energy_recovering_original | u(2) |
| } | |
| ... | |

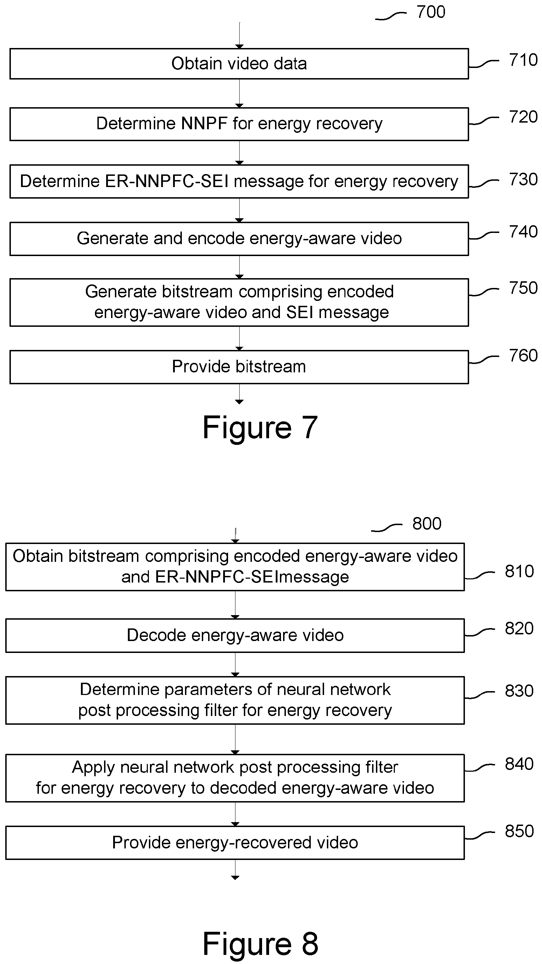

**Figure 7** illustrates an example process for encoding a bitstream comprising an ER-NNPFC-SEI message according to embodiments. The process 700 is for example implemented by a processor 1010 of a device 1000 of figure 1, a system 210 of figure 2, or an encoder 300 of figure 3. In step 710, the processor obtains video data. In step 720, the processor optionally determines neural network post-processing filter parameters related to energy recovery. In step 730, the processor determines an ER-NNPFC-SEI message that indicates the energy recovery process, for example according to the syntax described above including the optional parameters. In step 740, the processor generates an energy-aware video from the video data and conventionally encodes the energy-aware video data. The energy-aware video generation may use a neural network (e.g., InvEAN) or any other technique (e.g., histogram clipping, linear scaling), adapted to perform energy reduction. In step 750, the processor determines a bitstream that comprises the encoded energy-aware video data and the ER-NNPFC-SEI message. In step 760, the processor provides the bitstream.

In at least one embodiment, the NNPF is predetermined (i.e. standardized). In at least one embodiment, the NNPF is defined by a URL. In at least one embodiment, the weights of the NNPF model are transmitted in the bitstream (for example using ISO/IEC 15938-17 syntax introduced in table 2). These methods are activated using the **nnpfc_mode_id** flag and setting the appropriate parameters.

**Figure 8** illustrates an example process for decoding a bitstream comprising an ER-NNPFC-SEI message according to embodiments. The process 800 is for example implemented by a device 1000 of figure 1, a system 230 of figure 2, or a decoder 400 of figure 4. In step 810, the processor obtains the bitstream that comprises an encoded energy-aware video data and an ER-NNPFC-SEI message, for example based on the syntax of tables described above. In step 820, the processor conventionally decodes the energy-aware video from the encoded energy-aware video data. In step 830, the processor optionally determines neural network post-processing filter characteristics related to energy reduction from the ER-NNPFC-SEI message. In step 840, the processor applies the energy recovery neural network post-processing filter to the decoded energy-aware video and generates a video with recovered energy. In step 850, the processor provides the video with recovered energy.

In at least one embodiment, the neural network post-processing filter is applied only under certain conditions such as a user choice, a device configuration parameter, a parameter of the device (such as low level of battery for mobile devices) or other conditions.

Although some parts of the description refer to video, the embodiments are not restricted to conventional (2D) videos and apply to any type of visual media content such as static images, stereoscopic (3D) images or videos, 360° immersive images or video, point clouds, based on the same principles as described above.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

The aspects described and contemplated in this application can be implemented in many different forms. Figures provide some embodiments, but other embodiments are contemplated and the discussion of these figures does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

Various methods are described herein, and each of the methods comprises one or more steps or actions for achieving the described method. Unless a specific order of steps or actions is required for proper operation of the method, the order and/or use of specific steps and/or actions may be modified or combined.

Various numeric values are used in the present application, for example, 128 for the block size. The specific values are for example purposes and the aspects described are not limited to these specific values.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, adapting the illumination compensation process.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein, are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, tablets, smartphones, cell phones, portable/personal digital assistants, and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

In the present application, the terms "reconstructed" and "decoded" may be used interchangeably, the terms "pixel" and "sample" may be used interchangeably, the terms "image," "picture", "frame", "slice" and "tiles" may be used interchangeably. Usually, but not necessarily, the term "reconstructed" is used at the encoder side while "decoded" is used at the decoder side. The terms "Post-Filter" and "Post-processing filter" may be used interchangeably.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of an illumination compensation parameter. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination, across various claim categories and types.

**Claims**

1. A method comprising:

   obtaining a bitstream comprising encoded video data with reduced energy and a supplemental enhancement information message comprising a flag enabling energy recovery neural network post-processing filter;
   decoding video;
   in the condition that the flag enabling energy recovery neural network post-processing filter is enabled, applying to the decoded video the energy recovery neural network post-processing filter; and
   providing the video.

2. The method of claim 1, wherein the supplemental enhancement information message further comprises information representative of an energy recovery ratio for the energy recovery neural network post-processing filter.

3. The method of any of claims 1 or 2, wherein the supplemental enhancement information message further comprises information representative of a selection of components of the video on which to apply the energy recovery neural network post-processing filter.

4. A method comprising:

   obtaining video data;
   determining a supplemental enhancement information message comprising a flag enabling energy recovery neural network post-processing filter;
   determining video data with reduced energy from the obtained video data;
   encoding video data with reduced energy;
   generating a bitstream comprising encoded video and supplemental enhancement information message; and
   providing the bitstream.

5. The method of claim 4, wherein the supplemental enhancement information message further comprises information representative of an energy recovery ratio for the energy recovery neural network post-processing filter.

6. The method of any of claims 4 or 5, wherein the supplemental enhancement information message further comprises information representative of a selection of components of the video on which to apply the energy recovery neural network post-processing filter.

7. An apparatus comprising one or more processor configured to:

   obtain a bitstream comprising encoded video data with reduced energy and a supplemental enhancement information message comprising a flag enabling energy recovery neural network post-processing filter;
   decode video;
   in the condition that the flag enabling energy recovery neural network post-processing filter is enabled, apply to the decoded video the energy recovery neural network post-processing filter; and
   provide the video.

8. The apparatus of claim 7, wherein the supplemental enhancement information message further comprises information representative of an energy recovery ratio for the energy recovery neural network post-processing filter.

9. The apparatus of any of claims 7 or 8, wherein the supplemental enhancement information message further comprises information representative of a selection of components of the video on which to apply the energy recovery neural network post-processing filter.

10. An apparatus comprising one or more processor configured to:

    obtain video data;
    determine a supplemental enhancement information message comprising a flag enabling energy recovery neural network post-processing filter;
    determine video data with reduced energy from the obtained video data;
    encode video data with reduced energy;
    generate a bitstream comprising encoded video and supplemental enhancement information message; and
    provide the bitstream.

11. The apparatus of claim 10, wherein the supplemental enhancement information message further comprises information representative of an energy recovery ratio for the energy recovery neural network post-processing filter.

12. The apparatus of any of claims 10 or 11, wherein the supplemental enhancement information message further comprises information representative of a selection of components of the video on which to apply the energy recovery neural network post-processing filter.

13. A non-transitory computer readable medium comprising data content generated according to the method of any one of claims 4 to 6.

14. A non-transitory computer readable medium comprising instructions for performing the method of any one of claims 1 to 6 when executed by one of more processor.

15. A computer program product comprising instructions for performing the method of any one of claims 1 to 6 when executed by one of more processor.

1000

| 1130 | 1010 | 1020 | 1070 |
|------|------|------|------|
| | Processor | Memory | Display |

1080

1140

RF, COMP, USB, HDMI

Audio

1090

| 1030 | 1040 |
|------|------|
| Encoder/ Decoder | Storage Device |

Peripheral Interface

1100

Display

1110

Speakers

1120

Peripherals

Communications Interface ~1050

Communications Channel

1060

Figure 1

~200

| 210 | 220 | 230 | 230 | 250 |

Figure 2

Figure 3

400

Figure 4

Figure 5

EP 4 633 151 A1

Figure 6

EP 4 633 151 A1

_/- 700

| Obtain video data | _/- 710 |

| Determine NNPF for energy recovery | _/- 720 |

| Determine ER-NNPFC-SEI message for energy recovery | _/- 730 |

| Generate and encode energy-aware video | _/- 740 |

| Generate bitstream comprising encoded energy-aware video and SEI message | _/- 750 |

| Provide bitstream | _/- 760 |

# Figure 7

_/- 800

| Obtain bitstream comprising encoded energy-aware video and ER-NNPFC-SEImessage | _/- 810 |

| Decode energy-aware video | _/- 820 |

| Determine parameters of neural network post processing filter for energy recovery | _/- 830 |

| Apply neural network post processing filter for energy recovery to decoded energy-aware video | _/- 840 |

| Provide energy-recovered video | _/- 850 |

# Figure 8

Europäisches
Patentamt

European
Patent Office

Office européen
des brevets

## EUROPEAN SEARCH REPORT

**Application Number**

EP 24 30 5576

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | WO 2023/143927 A1 (KONINKLIJKE PHILIPS NV [NL]) 3 August 2023 (2023-08-03)<br>* abstract *<br>* page 5, line 16 - page 7, line 26 *<br>* page 17, line 20 - page 20, line 30 *<br>* figures 2,3 *<br>----- | 1,4,7, 10,13-15<br>2,3,5,6, 8,9,11, 12 | INV.<br>H04N19/117<br>H04N19/70<br>H04N19/85 |
| X | PETTERSSON (ERICSSON) M ET AL: "AHG9: Additional purposes for the NNPFC SEI message",<br>30. JVET MEETING; 20230421 - 20230428; ANTALYA; (THE JOINT VIDEO EXPLORATION TEAM OF ISO/IEC JTC1/SC29/WG11 AND ITU-T SG.16 ),<br>,<br>no. JVET-AD0154 ; m62814<br>23 April 2023 (2023-04-23), XP030308850,<br>Retrieved from the Internet:<br>URL:https://jvet-experts.org/doc_end_user/documents/30_Antalya/wg11/JVET-AD0154-v2.zip JVET-AD0154_v2.docx<br>[retrieved on 2023-04-23]<br>* abstract *<br>* section 1.1 Separate colour description in the NNPFC SEI message *<br>* section 3.1 NNPFC purpose for colour range conversion *<br>* section 3.3.1 Proposed syntax and semantics *<br>-----<br>-/-- | 1-15 | |

**TECHNICAL FIELDS SEARCHED (IPC)**

H04N

The present search report has been drawn up for all claims

| Place of search | Date of completion of the search | Examiner |
|---|---|---|
| The Hague | 19 September 2024 | Hampson, Frances |

EPO FORM 1503 03.82 (P04C01)

Europäisches
Patentamt

European
Patent Office

Office européen
des brevets

## EUROPEAN SEARCH REPORT

**Application Number**

EP 24 30 5576

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MCCARTHY S ET AL: "Additional SEI messages for VSEI (Draft 5)", 31. JVET MEETING; 20230711 - 20230719; GENEVA; (THE JOINT VIDEO EXPLORATION TEAM OF ISO/IEC JTC1/SC29/WG11 AND ITU-T SG.16 ), , no. JVET-AE2006 ; m64596 20 July 2023 (2023-07-20), XP030311717, Retrieved from the Internet: URL:https://jvet-experts.org/doc_end_user/ documents/31_Geneva/wg11/JVET-AE2006-v1.zi p JVET-AE2006-v1.docx [retrieved on 2023-07-20] * the whole document * ----- | 1-15 | |
| | | | TECHNICAL FIELDS SEARCHED (IPC) |

The present search report has been drawn up for all claims

| Place of search | Date of completion of the search | Examiner |
|---|---|---|
| The Hague | 19 September 2024 | Hampson, Frances |

EPO FORM 1503 03.82 (P04C01)

EP 4 633 151 A1

## ANNEX TO THE EUROPEAN SEARCH REPORT
## ON EUROPEAN PATENT APPLICATION NO.

EP 24 30 5576

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2024

| Patent document cited in search report | Publication date | Patent family member(s) | Publication date |
|---|---|---|---|
| WO 2023143927 A1 | 03-08-2023 | CN 118633102 A | 10-09-2024 |
| | | EP 4220539 A1 | 02-08-2023 |
| | | WO 2023143927 A1 | 03-08-2023 |

EPO FORM P0459

For more details about this annex : see Official Journal of the European Patent Office, No. 12/82

**EP 4 633 151 A1**

**Patent documents cited in the description**

- EP 23305294